# EUROPÄISCHE PATENTANMELDUNG

(11) **EP 2 243 538 A2**
(43) Veröffentlichungstag der Anmeldung: **27.10.2010**
(21) Anmeldenummer: 10160676.2
(22) Anmeldetag: 22.04.2010
(51) Int. Cl.: B01D 53/047, B01D 53/14, C10L 3/10

(54) **Verfahren zur Entfernung von sauren Gaskomponenten aus einem Gasgemisch**

(30) Priorität: 22.04.2009 DE 102009018444
(71) Anmelder: Uhde GmbH, 44141 Dortmund (DE)
(72) Erfinder: Menzel, Johannes, 45731, Waltrop (DE)
(74) Vertreter: Albrecht, Rainer Harald

(57) **Zusammenfassung**

Die Erfindung betrifft ein Verfahren zur Entfernung von sauren Gaskomponenten, wie insbesondere Schwefelwasserstoff und Kohlendioxid, aus einem Gasgemisch, wobei ein physikalisch wirkendes Absorptionsmittel in einer ersten Absorptionskolonne (3) mit dem unter Druck stehenden Gasgemisch in direkten Kontakt gebracht wird und dabei die sauren Gaskomponenten zumindest teilweise und zusätzlich einen Anteil eines in dem Gasgemisch enthaltenden Nutzgases aufnimmt, wobei das beladene Absorptionsmittel nachfolgend aus der ersten Absorptionskolonne (3) abgezogen und zur Rückgewinnung des Nutzgases einem Recycle-Flashbehälter (6) zugeführt wird, in dem das beladene Absorptionsmittel entspannt wird und dadurch ein Recyclegas, welches Nutzgas und saure Gaskomponenten enthält, gebildet wird und wobei das Recyclegas zur weiteren Nutzung verdichtet wird Erfindungsgemäß wird das aus der ersten Absorptionskolonne (3) abgezogene, beladene Absorptionsmittel vor dem Eintritt in den Recycle-Flashbehälter (6) zunächst zumindest teilweise einer zweiten Absorptionskolonne (8) zugeführt, wobei das in dem Recycle-Flashbehälter (6) gebildete und verdichtete Recyclegas der zweiten Absorptionskolonne (8) zugeführt wird, in der es mit dem durch die zweite Absorptionskolonne (8) geführten, beladenen Absorptionsmittel in direkten Kontakt gebracht wird und wobei nachfolgend das in der zweiten Absorptionskolonne (8) zumindest teilweise gereinigte Recyclegas zu dem Strom des Gasgemisches zurückgeführt wird.

## Beschreibung

### Beschreibung:

Die Erfindung betrifft ein Verfahren zur Entfernung von sauren Gaskomponenten, wie insbesondere Schwefelwasserstoff und Kohlendioxid, aus einem Gasgemisch, wobei ein physikalisch wirkendes Absorptionsmittel in einer ersten Absorptionskolonne mit dem unter Druck stehenden Gasgemisch in direkten Kontakt gebracht wird und dabei die sauren Gaskomponenten zumindest teilweise und zusätzlich einen Anteil eines in dem Gasgemisch enthaltenden Nutzgases aufnimmt, wobei das beladene Absorptionsmittel nachfolgend aus der ersten Absorptionskolonne abgezogen und zur Rückgewinnung des Nutzgases einem Recycle-Flashbehälter zugeführt wird, in dem das beladene Absorptionsmittel entspannt wird und dadurch ein Recyclegas, welches Nutzgas und saure Gaskomponenten enthält, gebildet wird und wobei das Recyclegas zur weiteren Nutzung verdichtet wird.

Das synthetische oder natürliche Gasgemisch kann als Nutzgas beispielsweise Kohlenwasserstoffverbindungen und als saure Gaskomponenten Schwefelwasserstoff, organische Schwefelverbindungen und/oder Kohlendioxid enthalten.

Sowohl aus verfahrenstechnischer Sicht als auch zur Vermeidung einer Umweltbelastung ist vor der weiteren Verwendung eines Gasgemisches wie natürlichem Erdgas in der Regel eine zumindest weitgehende Entfernung der sauren Gaskomponenten erforderlich. In der Praxis werden dazu sowohl chemisch wirkende Absorptionsmittel als auch physikalisch wirkenden Absorptionsmittel, wie beispielsweise Polypropylencarbonat, Methanol, N-Methyl-Pyrrolidon, N-Formylmorpholin, N-Acetylmorpholin und Mischungen der genannten Stoffe verwendet. Geeignete Absorptionsmittel sind beispielsweise unter den Markennamen Selexol®, Pursiol®, Genosorb® und Morphysorb® bekannt.

Wenn ein Gasgemisch in einer Absorptionskoionne mittels eines physikalisch wirkenden Absorptionsmittels gereinigt wird, besteht das Problem, dass üblicherweise auch ein gewisser Anteil des Nutzgases von dem Absorptionsmittel aufgenommen wird. Um das Nutzgas zurückgewinnen zu können, ist aus der DE 103 13 438 A1 bekannt, das Absorptionsmittel nach dem Waschen des Gasgemisches innerhalb einer Absorptionskolonne in einen Recycle-Flashbehälter zu führen, in dem das beladene Absorptionsmittel entspannt wird. Durch das Entspannen wird ein Recyclegas gebildet, welches Nutzgas und saure Gaskomponenten enthält. Das in dem Recycle-Flashbehälter gebildete Recyclegas wird zur weiteren Nutzung verdichtet und aufgrund des hohen Anteils an sauren Gaskomponenten dem Gasgemisch vor seiner Reinigung mit dem physikalisch wirkenden Absorptionsmittel zugeführt. Das aus dem Recycle-Flashbehälter abgezogene Absorptionsmittel wird regeneriert und in einem Kreislauf erneut der Absorptionskolonne zugeführt.

Aus der Praxis ist des Weiteren bekannt, das in dem Recycle-Flashbehälter gebildete Recyclegas einer zusätzlichen, kleineren Absorptionskolonne zuzuführen, wobei das Recyclegas dort durch frisches, regeneriertes Absorptionsmittel zumindest teilweise von den sauren Gaskomponenten befreit wird. Nachteilig ist, dass dabei zusätzliches, regeneriertes Absorptionsmittel benötigt wird, wodurch die insgesamt erforderliche Menge an Absorptionsmittel, welches in einem Kreislauf geführt wird, erhöht ist. Entsprechend muss der gesamte Kreislauf für den Umlauf einer großen Absorptionsmittelmenge ausgelegt sein, so dass die Investitions- und Betriebskosten vergleichsweise hoch sind.

Vor diesem Hintergrund liegt der Erfindung die Aufgabe zugrunde, ein Verfahren anzugeben, welches bei einem geringen Einsatz eines physikalisch wirkenden Absorptionsmittels eine effiziente Entfernung von sauren Gaskomponenten aus einem Gasgemisch ermöglicht.

Ausgehend von einem Verfahren mit den eingangs beschriebenen Merkmalen wird die Aufgabe erfindungsgemäß dadurch gelöst, dass das aus der ersten Absorptionskolonne abgezogene, beladene Absorptionsmittel in einen ersten und einen zweiten Teilstrom aufgeteilt wird, wobei der erste Teilstrom unmittelbar und der zweite Teilstrom nach dem Durchlaufen einer zweiten Absorptionskolonne dem Recycle-Flashbehälter zugeführt werden, dass das in dem Recycle-Flashbehälter gebildete und verdichtete Recyclegas der zweiten Absorptionskolonne zugeführt wird, in der es mit dem durch die zweite Absorptionskolonne geführten zweiten Teilstrom in direkten Kontakt gebracht wird und dass nachfolgend das in der zweiten Absorptionskolonne zumindest teilweise gereinigte Recyclegas zu dem Gasgemisch zurückgeführt wird. Gemäß einer bevorzugten Ausgestaltung beträgt der Anteil des ausgeschleusten, zweiten Teilstroms bis zu einem Drittel der Gesamtmenge des Absorptionsmittels. Der Erfindung liegt insbesondere die Erkenntnis zugrunde, dass das von der ersten Absorptionskolonne kommende hoch angereicherte Absorptionsmittel noch in einem gewissen Maße zur Entfernung von sauren Gaskomponenten aus dem Recyclegas genutzt werden kann, wenn das in dem Recycle-Flashbehälter gebildete Recyclegas zunächst verdichtet und dann unter Druck mit dem bereits beladenen Absorptionsmittel in einen direkten Kontakt gebracht wird. Der Kontakt erfolgt in der zweiten Absorptionskolonne zweckmäßigerweise im Gegenstrom.

Der zweite Teilstrom kann dabei beispielsweise mittels einer Pumpe auf den Kopf der zweiten Absorptionskolonne geführt werden.

Das Absorptionsvermögen des Absorptionsmittels ist insbesondere von dem herrschenden Druck abhängig. Um in der ersten Absorptionskolonne eine effektive Aufnahme der sauren Gaskomponenten zu ermöglichen, liegt der Druck dort üblicherweise zwischen 10 bar und 150 bar, vorzugsweise oberhalb von 50 bar, besonders bevorzugt oberhalb von 70 bar. In dem Recycle-Flashbehälter erfolgt eine Entspannung des beladenen Absorptionsmittels, wodurch das Flashgas gebildet wird. Es ist ein Druck unterhalb des Betriebsdruck der ersten Absorptionskolonne zu wählen, bei dem ein großer Anteil an Nutzgas aber nur ein möglichst geringer Anteil der sauren Gaskomponenten freigesetzt wird. Schließlich wird das gebildete Flashgas zur zumindest teilweisen Reinigung in der zweiten Absorptionskolonne komprimiert. Dabei wird zweckmäßigerweise ein Druck eingestellt, der in etwa dem Druck in der ersten Absorptionskolonne entspricht oder der höher als der Druck in der ersten Absorptionskolonne ist. Durch eine Druckerhöhung in der zweiten Absorptionskolonne kann das Aufnahmevermögen des Absorptionsmittels weiter gesteigert werden.

Gemäß einer ersten Weiterbildung des Verfahren wird das aus der zweiten Absorptionskolonne abgezogene, teilweise von den sauren Gaskomponenten gereinigte Recyclegas einem Sumpf der ersten Absorptionskolonne zugeführt, wobei das Recyclegas dann mit dem Strom des Gasgemisches durch die Absorptionskolonne geführt und zur weiteren Reinigung mit dem Absorptionsmittel in einem direkten Kontakt gebracht wird. Verglichen mit dem aus der DE 103 13 438 A1 bekannten Verfahren, bei dem das Recyclegas von dem Recycle-Flashbehälter unmittelbar in den Sumpf der einzigen dort vorgesehenen Absorptionskolonne geführt wird, ergibt sich bei einem gleichen Bedarf an Absorptionsmittel eine effizientere Entfernung von sauren Gaskomponenten. Gemäß einer zweiten Weiterbildung des Verfahrens wird das aus der zweiten Absorptionskolonne abgezogene Recyclegas dem Gasstrom des Gasgemisches zugeführt, nachdem dieser die erste Absorptionskolonne verlassen hat. Nach dem Verlassen der zweiten Absorptionskolonne ist eine weitere Entfernung saurer Gaskomponenten aus dem Recyclegas nicht vorgesehen. Die beschriebene zweite Weiterbildung ist besonders dann vorteilhaft, wenn nur ein Teil des sauren Gaskomponenten aus dem Gasgemisch entfernt werden soll und die unvollständige Reinigung des Recyclegases hingenommen werden kann. Da das Recyclegas nicht durch die erste Absorptionskolonne geführt wird und ein Teil der sauren Gaskomponenten in der zweiten Absorptionskolonne entfernt wird, kann die dadurch in der ersten Absorptionskolonne nicht benötigte Reinigungskapazität genutzt werden, um die Durchsatzmenge des Gasgemisches durch die erste Absorptionskolonne zu vergrößern. Das erfindungsgemäße Verfahren kann daher genutzt werden, um die Gesamtkapazität einer bereits bestehenden Sauergasabsorptionsanlage zu erhöhen, ohne dass eine Veränderung des vorhandenen Absorptionsmittelkreislaufes erforderlich ist.

Es ist auch möglich die erste und die zweite Weiterbildung so zu kombinieren, dass das aus der zweiten Absorptionskolonne abgezogene Recyclegas durch entsprechende Steuereinrichtungen wahlweise dem Sumpf der ersten Absorptionskolonne oder nach der ersten Absorptionskolonne dem Strom des Gasgemisches zugeführt wird. Des Weiteren kann auch eine variable Aufteilung des aus der zweiten Absorptionskolonne abgezogenen Recyclegases erfolgen. Eine solche Ausgestaltung kann dazu genutzt werden bei unterschiedlichen Randbedingungen festgelegte Vorgabewerte zu erreichen und/oder auf unterschiedliche Zuflussmengen des Gasgemisches reagieren zu können.

Nach dem Verlassen des Recycle-Flashbehälters wird das Absorptionsmittel in bekannter Weise regeneriert, wobei die von dem Absorptionsmittel aufgenommenen sauren Gaskomponenten beispielsweise durch eine weitere Entspannung und/oder durch Erwärmung entfernt werden und wobei das regenerierte Absorptionsmittel in einem Kreislauf wieder zu der ersten Absorptionskolonne geleitet wird.

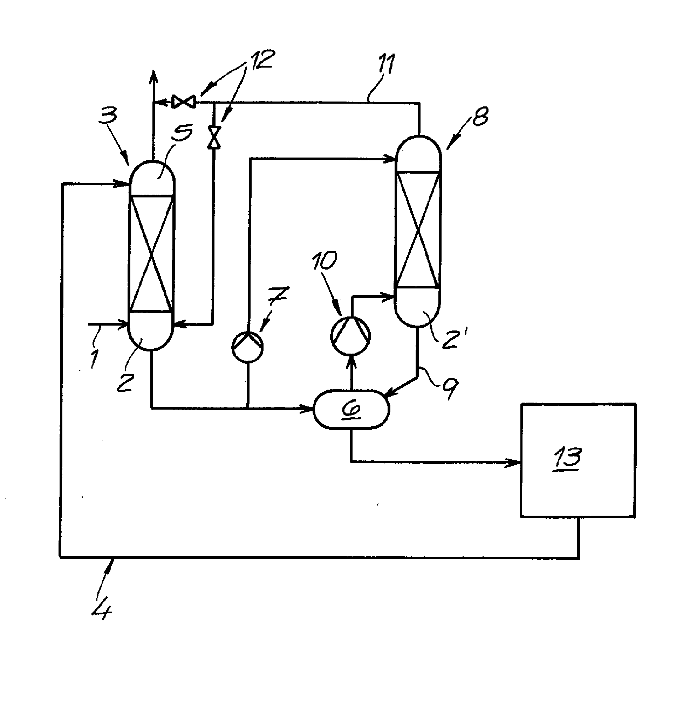

Die Erfindung wird im folgenden anhand einer lediglich ein Ausführungsbeispiel darstellenden Zeichnung erläutert. Die einzige Figur zeigt schematisch eine Vorrichtung zur Durchführung des erfindungsgemäßen Verfahrens.

Gemäß der einzigen Figur wird ein Gasgemisch, welches ein Nutzgas und saure Gaskomponenten enthält, über eine Zuleitung 1 einem Sumpf 2 einer ersten Absorptionskolonne 3 zugeführt und in der ersten Absorptionskolonne 3 im Gegenstrom in einen direkten Kontakt mit einem frischen, regenerierten physikalisch wirkenden Absorptionsmittel gebracht, welches über eine Leitung eines Absorptionsmittelkreislaufes 4 in einem Kopfbereich 5 der ersten Absorptionskolonne 3 zugeführt wird. Bei dem direkten Kontakt mit dem Gasgemisch nimmt das Absorptionsmittel die sauren Gaskomponenten zumindest teilweise und zusätzlich auch einen Teil des Nutzgases auf.

Um das von dem Absorptionsmittel aufgenommene Nutzgas zurückgewinnen zu können, ist ein Recycle-Flashbehälter 6 vorgesehen. Das aus der ersten Absorptionskolonne 3 abgezogene, beladene Absorptionsmittel wird vor dem Eintritt in den Recycle-Flashbehälter 6 in einen ersten und einen zweiten Teilstrom aufgeteilt. Der erste Teilstrom wird unmittelbar dem Recycle-Flashbehälter 6 zugeleitet und entspannt, wodurch Recyclegas gebildet wird, welches Nutzgas und saure Gaskomponenten enthält. Der zweite Teilstrom wird dagegen mittels einer Pumpe 7 zu einer zweiten Absorptionskolonne 8 geführt. Der zweite Teilstrom des beladenen Absorptionsmittels durchströmt die zweite Absorptionskolonne 8 und verlässt diese über einen Sumpf 2'. Der zweite Teilstrom gelangt nachfolgend über eine Verbindungsleitung 9 in den Recycle-Flashbehälter 6 und wird dort unter zusätzlicher Bildung von Recyclegas entspannt.

Das in dem Recycle-Flaschbehälter 6 gebildete Recyclegas wird von einem Kompressor 10 verdichtet und der zweiten Absorptionskolonne 8 zugeführt, die es im Gegenstrom zu dem zweiten Teilstrom des beladenen Absorptionsmittels durchströmt, wobei durch den direkten Kontakt und den in der zweiten Absorptionskolonne 8 herrschenden Druck ein Teil der in dem Recyclegas enthaltenden sauren Gaskomponenten von dem zweiten Teilstrom des Absorptionsmittels aufgenommen wird. Das in der zweiten Absorptionskolonne 8 zumindest teilweise von den sauren Gaskomponenten befreite Recyclegas wird über eine Rückführungsleitung 11 wahlweise dem Sumpf 2 der ersten Absorptionskolonne 3 oder dem Strom des Gasgemisches erst nach dem Verlassen der ersten Absorptionskolonne 3 zugeführt. Insbesondere können auch Ventile 12 als Steuereinrichtungen vorgesehen sein, um den Fluss in der Rückführungsleitung 11 aufzuteilen.

Das in dem Recycle-Flashbehälter 6 gesammelte Absorptionsmittel wird in einer an sich bekannten und in der einzigen Figur nur angedeuteten Regenerationsvorrichtung 13 aufgearbeitet und von den sauren Gaskomponenten befreit, bevor es über den Absorptionsmittelkreislauf 4 erneut der ersten Absorptionskolonne 3 zugeführt wird.

## Patentansprüche

1. Verfahren zur Entfernung von sauren Gaskomponenten, wie insbesondere Schwefelwasserstoff und Kohlendioxid, aus einem Gasgemisch,
wobei ein physikalisch wirkendes Absorptionsmittel in einer ersten Absorptionskolonne (3) mit dem unter Druck stehenden Gasgemisch in direkten Kontakt gebracht wird und dabei die sauren Gaskomponenten zumindest teilweise und zusätzlich einen Anteil eines in dem Gasgemisch enthaltenden Nutzgases aufnimmt,
wobei das beladene Absorptionsmittel nachfolgend aus der ersten Absorptionskolonne (3) abgezogen und zur Rückgewinnung des Nutzgases einem Recycle-Flashbehälter (6) zugeführt wird, in dem das beladene Absorptionsmittel entspannt wird und **dadurch** ein Recyclegas, welches Nutzgas und saure Gaskomponenten enthält, gebildet wird und wobei das Recyclegas zur weiteren Nutzung verdichtet wird
**dadurch gekennzeichnet, dass** das aus der ersten Absorptionskolonne (3) abgezogene, beladene Absorptionsmittel in einen ersten und einen zweiten Teilstrom aufgeteilt wird, wobei der erste Teilstrom unmittelbar und der zweite Teilstrom nach dem Durchlaufen einer zweiten Absorptionskolonne (8) dem Recycle-Flashbehälter (6) zugeführt werden, dass das in dem Recycle-Flashbehälter (6) gebildete und verdichtete Recyclegas der zweiten Absorptionskolonne (8) zugeführt wird, in der es mit dem durch die zweite Absorptionskolonne (8) geführten, zweiten Teilstrom in direkten Kontakt gebracht wird und dass nachfolgend das in der zweiten Absorptionskolonne (8) zumindest teilweise gereinigte Recyclegas zu dem Gasgemisch zurückgeführt wird.

2. Verfahren nach Anspruch 1, **dadurch gekennzeichnet, dass** das aus der zweiten Absorptionskolonne (8) abgezogene Recyclegas einem Sumpf (2) der ersten Absorptionskolonne (3) zugeführt wird.

3. Verfahren nach Anspruch 1, **dadurch gekennzeichnet, dass** das aus der zweiten Absorptionskolonne (8) abgezogene Recyclegas dem Gasstrom des Gasgemisches zugeführt wird, nachdem dieser die erste Absorptionskolonne (3) verlassen hat.

4. Verfahren nach Anspruch 3, **dadurch gekennzeichnet, dass** ein Teil der sauren Gaskomponenten in der zweiten Absorptionskolonne (8) entfernt wird und dass die **dadurch** in der ersten Absorptionskolonne (3) nicht benötigte Reinigungskapazität genutzt wird, um die Durchsatzmenge des Gasgemisches durch die erste Absorptionskolonne (3) zu vergrößern.

5. Verfahren nach einem der Ansprüche 1 bis 4, **dadurch gekennzeichnet, dass** das Absorptionsmittel von dem Recycle-Flashbehälter (6) zur Aufbereitung einer Regenerationsvorrichtung (13) zugeführt wird.
